# FASCICULE DE BREVET EUROPEEN

(11) **EP 4 296 170 B1**
(45) Date de publication et mention de la délivrance du brevet: **06.08.2025**
(21) Numéro de dépôt: 22305907.2
(22) Date de dépôt: 22.06.2022
(51) Int. Cl.: B64F 1/228

(54) **SYSTÈME DE REMORQUAGE D'AÉRONEFS ET PROCÉDÉ DE REMORQUAGE D'UN AÉRONEF**
SYSTEM ZUM ABSCHLEPPEN VON LUFTFAHRZEUGEN UND VERFAHREN ZUM ABSCHLEPPEN EINES LUFTFAHRZEUGS
AIRCRAFT TOWING SYSTEM AND METHOD FOR TOWING AN AIRCRAFT

(43) Date de publication de la demande: 27.12.2023
(73) Titulaire: TLD Europe, 79420 Reffannes (FR)
(72) Inventeur: DECOUX, Laurent, 37250 SORIGNY (FR); HUDELOT, Romain, 37250 SORIGNY (FR)
(74) Mandataire: Tranvouez, Edern Morgan

(56) Documents cités:
- WO-A1-2021/156854
- WO-A2-2010/012261
- CN-A- 113 378 741
- US-A1- 2019 202 579

## Description

### Domaine technique

L'invention concerne le domaine des tracteurs d'aéronef et celui de leur commande.

La présente invention a plus particulièrement pour objet un système de remorquage d'aéronefs, un aéroport équipé d'un tel système et un procédé de remorquage d'aéronef.

### État de l'art antérieur

Les aéronefs n'ayant généralement pas la possibilité de reculer et présentant une manœuvrabilité réduite, il est connu de faire appel à des tracteurs d'aéronef pour notamment déplacer l'aéronef d'un emplacement de stationnement (aire de stationnement ou de trafic) vers un emplacement de début de roulage.

De telles opérations de traction des aéronefs, ou plus précisément de repoussage ou refoulement, sont relativement complexes à mettre en œuvre et nécessitent, outre le conducteur du tracteur, ceci en raison d'une visibilité limitée pour le conducteur en ce qui concerne les alentours de l'aéronef, un ou plusieurs agents de piste pour guider le conducteur pendant la manœuvre.

Afin d'optimiser ces opérations de repoussage et limiter le nombre de personnes se trouvant sur l'aire de trafic, il y aurait un intérêt d'au moins en partie automatiser la commande des tracteurs. Les documents WO2010012261A2 et US2019202579A1 divulguent des systèmes de remorquage qui sont au moins partiellement automatisés et qui ne nécessitent pas la présence d'opérateur sur place.

### Exposé de l'invention

Ainsi l'invention vise à remédier à cet inconvénient et a ainsi pour objet la fourniture d'un système de remorquage qui puisse être mis en œuvre à distance de la zone de remorquage dans laquelle doit avoir lieu le remorquage de l'aéronef tout en conservant un niveau de sécurisation élevé comme c'est le cas pour les systèmes de remorquage actuels basés sur un conducteur et au moins un agent de piste guidant le pilote.

Selon la revendication 1, l'invention concerne à cet effet, un système de remorquage d'aéronefs pour un aéroport présentant au moins une zone de remorquage dans laquelle un aéronef est susceptible d'être remorqué, le système de remorquage comprenant :
- au moins un tracteur configuré pour être opéré à distance au moyen d'une connexion sans fil et adapté pour tracter l'aéronef,
- un dispositif de commande destiné à être connecté au tracteur à partir de la connexion sans fil et apte à commander ledit tracteur,
- au moins un premier capteur destiné à être agencé dans la zone de remorquage, ce ou ces premiers capteurs étant indépendants du tracteur et étant aptes à fournir une information sur des éléments susceptibles d'être rencontrés par l'aéronef et/ou le tracteur lors de l'opération de remorquage de l'aéronef par le tracteur,
le dispositif de commande étant en outre configuré pour récupérer la ou les informations fournies par l'au moins un premier capteur et la ou les exploiter lors de la commande du tracteur pour tracter l'aéronef.

Avec un tel système de remorquage d'aéronefs, la présence d'agents de piste pour guider le tracteur pendant la manœuvre de repoussage est rendue inutile. En effet, grâce à l'au moins un premier capteur, le dispositif de commande est apte à prendre en compte les éventuels obstacles (ou éléments) lors du remorquage sans intervention d'un quelconque agent de piste. Il en résulte une réduction des risques pour ces derniers lors des manœuvres de repoussage.

La ou les informations sur les éléments susceptibles d'être rencontrés par l'aéronef et/ou le tracteur lors de l'opération de remorquage de l'aéronef par le tracteur est/sont aussi bien une ou plusieurs images de ces éléments, le ou les premiers capteurs étant alors chacun un capteur de type imageur, qu'une identification d'un emplacement de ces éléments vis-à-vis d'une référence, telle qu'une référence prédéfinie de la zone de remorquage ou l'un parmi le tracteur et l'aéronef, le ou les premiers capteurs étant alors chacun un dispositif de détection, par exemple de type télémétrique, apte à détecter les éléments susceptibles d'être rencontrés par l'aéronef et/ou le tracteur lors de l'opération de remorquage l'aéronef par le tracteur.

Il est entendu ci-dessus et dans le reste de ce document par image tout type de fichier numérique incorporant une ou plusieurs images en 2 dimensions ou en 3 dimensions, étant entendu, qu'une vidéo ou un flux vidéo incorpore une pluralité d'images et qu'une image obtenue par télédétection par laser (plus connu sous l'acronyme anglais LIDAR pour « Light detection and ranging ») est une image en 3 dimensions.

Par exploitation de l'information lors de la commande du tracteur pour tracter l'aéronef, il est entendu ici et dans le reste de ce document l'utilisation desdites informations pour identifier lesdits éléments soit par le dispositif de commande lui-même soit par un opérateur mettant en œuvre ledit dispositif de commande, ledit dispositif étant alors à même de présenter et/ou adapter cette ou ces informations pour les présenter à l'opérateur.

On notera que par « apte à être opéré à distance », il est entendu ici et dans le reste de ce document que le tracteur peut être commandé au moyen de la connexion sans fil ceci à une distance supérieure à 5 m, préférentiellement 50 m, voire à 500 m ou encore à 2 km. On notera ainsi que selon une première possibilité de l'invention, le tracteur peut être apte à être commandé à partir d'un bâtiment de l'aéroport, tel qu'une tour de contrôle de l'aéroport, ou encore à très longue distance. Ainsi, selon une deuxième possibilité de l'invention, le tracteur peut être commandé à partir d'une connexion à très grande distance, le dispositif de commande pouvant être positionné dans un centre de données (« data center ») à partir d'un serveur dédié, ou encore dans une entreprise spécialisée en dehors de l'aéroport, voire dans le domicile d'un opérateur dans le cadre de télétravail.

L'au moins un premier capteur est un capteur apte à fournir une image d'au moins une partie de la zone de remorquage, ledit au moins premier capteur étant préférentiellement choisi parmi : une caméra optique dans le visible ou l'infrarouge et un imageur du type télédétection par laser.

De cette manière, il est possible d'obtenir une information visuelle des éléments susceptibles d'être rencontrés par l'aéronef et/ou le tracteur pendant la commande de ce dernier afin de limiter les risques de chocs pendant le remorquage.

Le dispositif de commande présente une interface homme/machine de telle manière à autoriser la commande dudit tracteur par un opérateur à partir dudit dispositif de commande.

Le dispositif de commande comprend un système d'affichage apte à fournir un affichage incluant au moins en partie la ou les images fournies par l'au moins un premier capteur.

Un tel dispositif de commande permet de fournir l'information visuelle concernant lesdits éléments à l'éventuel opérateur s'occupant de la commande du tracteur à partir du dispositif de commande. Une telle information visuelle facilite la commande par l'opérateur qui est à même de visualiser les risques liés au tractage de l'aéronef.

Le système de remorquage d'aéronef peut comprendre une pluralité de premiers capteurs destinés à équiper la zone de remorquage et dans lequel le dispositif de commande est configuré pour combiner les images fournies par les premiers capteurs afin de fournir un affichage des éléments susceptibles d'être rencontrés par l'aéronef et/ou le tracteur sur la zone de remorquage lors de l'opération de remorquage.

Une telle combinaison d'images permet de fournir une vision d'ensemble de la situation de l'aéronef et/ou du tracteur limitant, de fait, les risques liés à ces différents éléments pendant l'opération de remorquage.

Le, ou au moins un, premier capteur peut être destiné à être installé de manière fixe dans la zone de remorquage.

De cette manière, il est possible d'agencer le ou les premiers capteurs sur des emplacements stratégiques de la zone de remorquage.

Le, ou au moins un, premier capteur équipe un engin mobile, ledit engin mobile étant préférentiellement choisi parmi un véhicule aéroportuaire et un engin mobile autonome dédié.

Ainsi, outre le fait qu'une telle possibilité permet de limiter les besoins de modifications de la zone de remorquage, il permet en plus de bénéficier d'un nombre important de points de vue, puisque chaque véhicule aéroportuaire est susceptible d'être équipé. On notera également que, dans le cas où le ou au moins un premier capteur équipe un engin autonome dédié, il est possible que le ou lesdits engins autonomes dédiés puissent suivre au plus près l'aéronef et le tracteur pendant le remorquage offrant de ce fait une couverture optimale de la zone autour de l'aéronef pendant la totalité de l'opération de remorquage. De tels engins autonomes peuvent en effet définir une barrière immatérielle définissant une zone dans laquelle tout élément susceptible d'être rencontré par l'aéronef et/ou le tracteur pourra être détecté.

Le ou chaque tracteur comprend au moins un deuxième capteur apte à détecter un obstacle se trouvant sur sa trajectoire, le dispositif de commande étant en outre configuré pour récupérer les informations fournies par l'au moins un deuxième capteur et les exploiter lors de la commande du tracteur pour tracter l'aéronef.

Un tel équipement participe à la sécurisation de l'opération de remorquage et permet, de plus, de sécuriser l'opération d'amenée du tracteur dans la zone de remorquage ceci alors même que l'ensemble de l'aéroport n'est pas nécessairement équipé de premiers capteurs.

Le dispositif de commande peut être apte à commander le tracteur de manière autonome sur la base d'au moins la ou les informations fournies par le ou les premiers capteurs.

L'invention concerne en outre, selon la revendication 7, un aéroport équipé d'un système de remorquage d'aéronefs selon l'invention.

Un tel aéroport bénéficie des avantages liés au système de remorquage dont il est équipé.

L'invention concerne en outre un procédé d'installation d'un système de remorquage d'aéronefs selon la revendication 8.

Un tel procédé permet l'installation d'un système de remorquage sur un aéroport et ainsi lui permet de bénéficier des avantages liés à ce système.

L'équipement de la zone de remorquage avec au moins un premier capteur peut être réalisé par le déploiement d'au moins un engin mobile présentant ledit au moins un premier capteur, l'engin mobile étant préférentiellement choisi parmi un véhicule aéroportuaire et un engin mobile autonome dédié.

De tels engins mobiles présentent l'avantage de faciliter l'installation du système de remorquage selon l'invention, puisqu'il n'est pas nécessaire d'installer les premiers capteurs de manière fixe. Le procédé en est donc facilité.

L'invention concerne en outre un procédé de remorquage d'aéronefs selon la revendication 10.

Avec un tel procédé, il est possible, conformément de réaliser le remorquage de l'aéronef en toute sécurité, puisque les informations fournies par le ou les premiers capteurs sont exploités afin de limiter les risques liés aux éléments susceptibles d'être rencontrés par l'aéronef et/ou le tracteur.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre une aire de stationnement équipée de premiers capteurs d'un système de remorquage d'aéronefs selon l'invention ;
- la figure 2 illustre un dispositif de commande d'un système de remorquage selon l'invention, l'un des écrans du dispositif de commande montrant les informations issues des premiers capteurs équipant l'aire de stationnement ;
- la figure 3 illustre sur la gauche une vue d'image reconstituée à partir des images fournies par les premiers capteurs de l'aire de stationnement dans le cadre d'une configuration de manœuvre de repoussage illustrée, en vue de dessus, sur la droite de cette même figure,
- la figure 4 illustre une aire de stationnement selon un deuxième mode de réalisation dans lequel les premiers capteurs du système de remorquage d'aéronef sont agencés sur des engins autonomes dédiés à la surveillance des alentours de l'aéronef pendant son remorquage afin de définir une barrière immatérielle.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

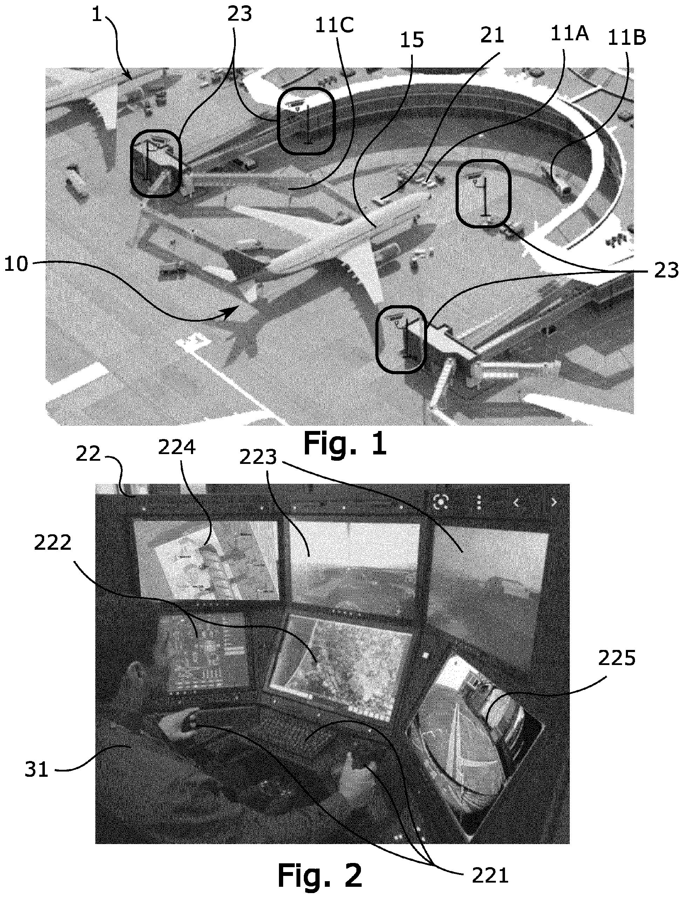

La figure 1 illustre une aire de stationnement 10 d'un aéroport 1 qui est équipé d'un système de remorquage selon un premier mode de réalisation de l'invention afin de permettre un remorquage d'un aéronef 15 à partir d'un tracteur 21 dudit système de remorquage.

On notera qu'une telle opération de remorquage concerne généralement les opérations de repoussage des aéronefs afin de les remorquer d'une aire de stationnement 10 à un emplacement de début de roulage, non figuré, la présente invention peut être mise en œuvre lors d'autres types de remorquage sans que l'on sorte du cadre de l'invention. On notera ainsi, par exemple, que le remorquage peut être réalisé dans une autre zone de remorquage qu'une aire de stationnement d'aéronef, telle qu'une zone d'entreposage ou de maintenance des aéronefs.

On notera également que le ou les tracteurs selon l'invention sont avantageusement des tracteurs « sans barres », généralement connus sous la dénomination anglaise « Towbarless tractor ». En effet, avec de tels tracteurs, l'accrochage de l'aéronef sur le tracteur peut se faire sans intervention humaine. Bien entendu, si cette possibilité est particulièrement avantageuse, le système de remorquage peut également être mise en œuvre à partir de tracteurs utilisant une barre de remorquage, un agent de piste pouvant alors intervenir uniquement pour accrocher la barre de remorquage à l'aéronef (le décrochage pouvant éventuellement être automatisé).

Un système de remorquage selon l'invention comprend :
- le tracteur 21, ledit tracteur étant configuré pour être opéré à distance au moyen d'une connexion sans fil et adapté pour tracter l'aéronef 15,
- un dispositif de commande 22, illustré sur la figure 2, connecté au tracteur 21 à partir de la connexion sans fil et apte à commander ledit tracteur 21, et
- quatre premiers capteurs 23 équipant l'aire de stationnement 10 et, les premiers capteurs 23 étant aptes à fournir une information sur des éléments 11A, 11B, 11C susceptibles d'être rencontrés par l'aéronef 15 et/ou le tracteur 21 lors de l'opération de remorquage de l'aéronef 15 par le tracteur 21.

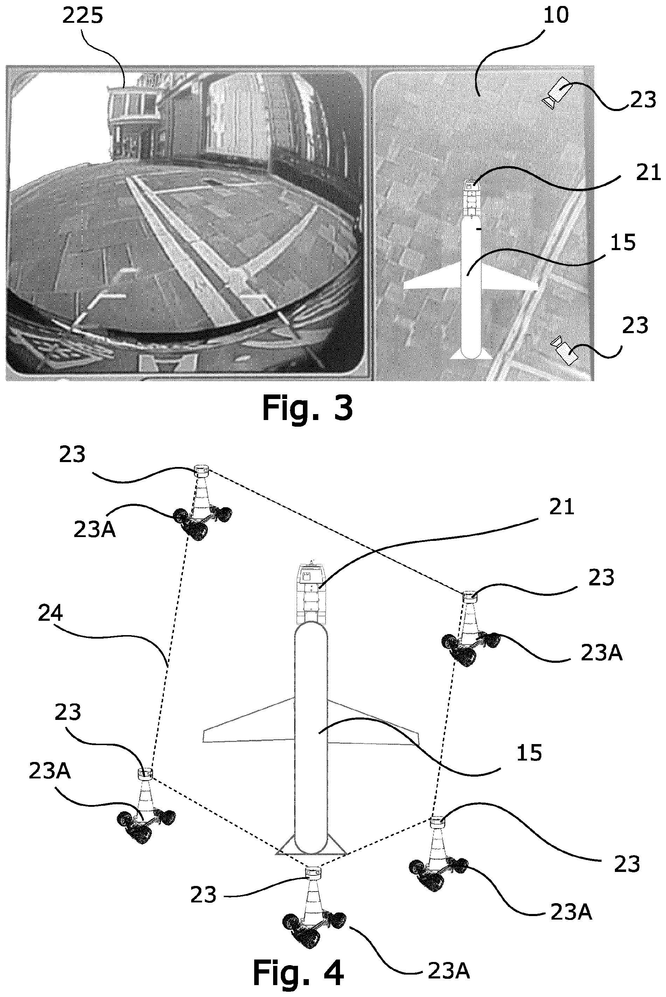

On notera que si les premiers capteurs 23 selon ce premier mode de réalisation sont installés de manière fixe, comme montré sur la figure 1, sur l'aire de stationnement ceci au moyen de poteaux, il est également envisageable, comme cela sera discuté en lien avec la figure 4, que les capteurs 23 soient agencés mobiles dans la présente aire de stationnement 10. Un tel agencement mobile peut être obtenu par exemple en installant ce ou ces premiers capteurs 23 sur un ou plusieurs véhicules aéroportuaires, tels que d'autres tracteurs 21 de remorquage, des bus ou encore des tracteurs transporteurs de bagages, ou encore sur un ou plusieurs engins mobiles autonomes dédiés 23A, comme cela est discuté plus après en lien avec la figure 4.

Conformément à l'invention, le dispositif de commande 22 est en outre configuré pour récupérer la ou les informations fournies par l'au moins un premier capteur 23 et la ou les exploiter lors de la commande du tracteur 21 pour tracter l'aéronef 15.

On notera que dans le cadre d'une mise en œuvre envisagée de l'invention, le dispositif de commande 22 peut ne pas être dédié à un tracteur 21 donné et peut être adapté pour commander d'autres tracteurs, le tracteur 21 commandé étant sélectionné en fonction de sa disponibilité et de sa proximité de l'aéronef, par exemple au moyen d'un logiciel de gestion de flotte d'aéronef. De plus, dans ce mode de réalisation, le dispositif de commande comprenant, comme illustré sur la figure 2, une interface homme /machine pour permettre une commande d'un tracteur 21 par un opérateur, l'aéroport peut comprendre plusieurs dispositifs de commande 22 afin de permettre plusieurs opérations de remorquage en parallèle les unes des autres.

Le tracteur 21 présente une configuration usuelle de tracteur autorisant le remorquage d'un aéronef 15, notamment en ce qui concerne la puissance et le système d'accrochage de train d'atterrissage d'aéronefs. Le tracteur 21 est préférentiellement à motorisation électrique et embarque, selon cette possibilité, des batteries d'une capacité suffisante pour qu'il puisse être opéré pendant plusieurs heures. Selon l'invention, le tracteur 21 est configuré pour être opéré à distance au moyen d'une connexion sans fil. Une telle connexion sans fil peut être une connexion radio-fréquence utilisant un protocole communication sans fil standard tel qu'un protocole WIFI ou un protocole cellulaire (GSM, GPRS, 3G, 4G ou encore 5G). Bien entendu, afin de sécuriser la communication entre le tracteur 21 et le dispositif de commande 22, la connexion sans fil est préférentiellement chiffrée et peut mettre en œuvre plusieurs boucles de contrôle redondants à la fois du côté émetteur et récepteur ceci afin d'éviter tout risque de piratage du tracteur 21. En variante, la connexion sans fil peut être basée sur un protocole propriétaire basé ou non sur un protocole communication sans fil standard. Quoi qu'il en soit, le protocole de communication sans fil est préférentiellement choisi comme présentant une faible latence afin de permettre une bonne prise en compte des commandes.

Le tracteur 21 peut en outre être équipé d'un ou plusieurs deuxièmes capteurs, non illustrés, afin de faciliter sa commande à distance. Ce ou ces deuxièmes capteurs sont aptes à détecter un obstacle se trouvant sur la trajectoire du tracteur 21. De tels deuxièmes capteurs, peuvent être, conformément au présent mode de réalisation, des caméras embarquées, préférentiellement dans les longueurs d'onde du visible. En alternative ou en complément le ou les deuxièmes capteurs peuvent également comprendre un ou plusieurs imageurs du type télédétection par laser ou des détecteurs à ultrasons.

Selon le présent mode de réalisation, le dispositif de commande 22 est adapté pour permettre une commande du tracteur par un opérateur 31 et présente donc une interface homme/machine 221, 222, 223, 224, 225 comprenant une interface de commande 221 et plusieurs écrans 222, 223, 224, 225. L'interface de commande 221 comprend deux joysticks permettant de contrôler les déplacements du tracteur 21 et d'un clavier permettant de modifier la configuration du dispositif de commande et notamment de configurer le tracteur commandé. En ce qui concerne les écrans 222, 223, 224, 225, deux écrans 222 affichent des informations concernant l'opération de remorquage en cours avec notamment des informations relatives à l'aéronef et une carte satellite. Deux autres écrans 223 fournissent un affichage issu de deuxièmes capteurs du tracteur 21 afin de permettre à l'opérateur 31 d'obtenir une visualisation similaire à celle qu'il aurait s'il était installé aux commandes du tracteur 21. Un cinquième écran 224 permet à l'opérateur d'accéder à un logiciel de gestion de flotte, tel que le logiciel XOPS^{™} commercialisé par la société RESONATE^{™}, afin d'identifier les aéronefs à tracter et les tracteurs 21 disponibles.

Un dernier écran 225 permet à l'opérateur 31 de visualiser les informations fournies par les premiers capteurs concernant les éléments 11A, 11B, 11C susceptibles d'être rencontrés par l'aéronef 15 et/ou le tracteur 21 lors de l'opération de remorquage de l'aéronef 15 par le tracteur 21. Dans le présent mode de réalisation, l'affichage fourni par ce dernier écran 225 correspond, comme montré sur la figure 3, à une vue 360° reconstituée à partir des images fournies par les premiers capteurs 23, ici des caméras optiques numériques dans les longueurs d'onde du visible. Bien entendu, une telle visualisation des informations fournies par les premiers capteurs 23 n'est qu'un exemple de réalisation de l'invention.

On notera que selon ce même exemple, il est possible que le dispositif de commande 22 soit en outre configuré pour identifier les éléments 11A, 11B, 11C susceptibles d'être rencontrés par l'aéronef 15 et/ou le tracteur 21 et les mettre en exergue, par exemple par une indication, en surbrillance de ces derniers et une éventuelle indication de distance vis-à-vis de l'aéronef 15 et/ou du tracteur 21.

Selon une variante non illustrée, les premiers détecteurs étant adaptés pour fournir une information de localisation desdits éléments 11A, 11B, 11C, le dispositif de commande peut être adapté pour fournir une visualisation de la zone autour du tracteur de l'aéronef figurant l'emplacement, voire une surface d'occupation desdits éléments 11A, 11B, 11C susceptibles d'être rencontrés par l'aéronef 15 et/ou le tracteur 21. Pour ce faire les premier capteurs 23 peuvent ainsi également être des capteurs aptes à déterminer la position, par exemple par triangulation, d'étiquettes radiofréquences agencés sur lesdits éléments 11A, 11B, 11C.

Le dispositif de commande 22 comprend en outre une unité de calcul, non illustrée, telle qu'un ou plusieurs ordinateurs, une ou plusieurs électroniques dédiées ou une combinaison hybride incluant un ou plusieurs ordinateurs interfacés à une ou plusieurs électroniques dédiées. Dans le présent mode de réalisation, l'unité de calcul est connectée à l'interface homme/machine, celle-ci étant commandée par l'interface de commande 221 et commandant l'affichage des écrans 222, 223, 225. Outre la connexion sans fil pour permettre la commande du tracteur 21 et la récupération des informations fournies par le ou les deuxièmes capteurs, l'unité de calcul est également connectée aux premiers capteurs afin de permettre une récupération des informations fournies par les premiers capteurs 23. De manière avantageuse, l'unité de calcul est également en communication avec une tour de contrôle, non illustrée, de l'aéroport 1 afin d'être informé des besoins en termes de remorquage.

On notera bien entendu que si dans le présent mode de réalisation, le dispositif de commande 22 est configuré pour permettre une commande du tracteur 21 à distance par l'opérateur 31, il est également envisageable, sans que l'on sorte du cadre de l'invention, que le dispositif de commande soit configuré pour commander un ou plusieurs tracteurs sans intervention d'un opérateur sur la base de demandes d'opération de remorquage transmise par la tour de contrôle. De la même façon, d'autres solutions hybrides sont parfaitement compatibles avec l'invention, l'opérateur 31 intervenant alors que sur certaines phases de l'opération de remorquage, tel que l'accrochage de l'aéronef 15, ou pour fournir des instructions générales sans fournir de commandes en temps réel telles qu'envisagées dans le cadre du présent mode de réalisation. De même, le dispositif de commande 22 peut également présenter plusieurs configurations de fonctionnement permettant de basculer entre les différentes possibilités de commandes mentionnées ci-dessus, cette bascule pouvant se faire soit en fonction du choix fait lors de l'installation du système de remorquage (notamment en fonction du type de premiers et de deuxièmes capteurs équipant l'aire de stationnement 10 et le ou les tracteurs 21) soit au cas par cas en fonction de la complexité de l'opération de remorquage.

Comme montré sur la figure 1, les premiers capteurs 23 équipent l'aire de stationnement 10 et sont agencés au niveau de cette dernière afin de permettre une surveillance d'au moins une zone de cette dernière dans laquelle l'opération de remorquage est susceptible d'être réalisée.

On peut ainsi voir sur la figure 1, que l'aire de stationnement 10 comprend dans le présent mode de réalisation quatre premiers capteurs 23 agencés aux quatre coins de l'aire de stationnement 10 afin de couvrir la totalité de la surface de cette dernière. Dans le cadre de ce mode de réalisation, les premiers capteurs 23 sont des capteurs aptes à fournir une image d'au moins une partie de l'aire de stationnement 10. Les premiers capteurs 23 sont plus précisément des caméras optiques fonctionnant dans les longueurs d'onde du visible.

Selon l'invention, en variante, le ou les premiers capteurs 23 peuvent chacun être choisi parmi : une caméra optique dans le visible ou l'infrarouge et un imageur du type télédétection par laser. D'autres types de premiers capteurs 23 sont également envisageables, en complément ou en remplacement de premiers capteurs de type imageur, tels que des dispositifs de détection, par exemple de type télémétrique, aptes à détecter les éléments susceptibles d'être rencontrés par l'aéronef et/ou le tracteur lors de l'opération de remorquage de l'aéronef par le tracteur 21.

On notera que les éléments 11A, 11B, 11C susceptibles d'être rencontrés par l'aéronef 15 et/ou le tracteur 21 sont, dans le cadre du présent document tout type d'élément se trouvant sur l'aire de stationnement 10 tel que par exemple et de manière non limitative des marchandises ou bagages 11A destinés à être chargés dans un aéronef, ou ayant été déchargés d'un tel aéronef, un véhicule 11B circulant ou stationné dans l'aire de stationnement 10, un élément de structure 11C mobile ou non de l'aire de stationnement 10 ou encore un agent de piste.

Un tel système de remorquage peut être installé dans un aéroport à partir d'un procédé d'installation d'un système de remorquage d'aéronefs 15 comprenant les étapes suivantes :
- fourniture du ou des tracteurs 21 (ou plus précisément dans le présent mode de réalisation des tracteurs 21) configurés pour être opérés à distance au moyen d'une connexion sans fil et adaptés pour tracter l'aéronef 15,
- installation du ou des dispositifs de commande 22 connectés au, ou aux, tracteurs 21 à partir de la connexion sans fil, le ou les dispositifs de commande étant aptes à commander le ou lesdits tracteurs 21, et
- équipement de l'aire de stationnement 10 avec le premier capteur 23 (ou dans le cadre de mode de réalisation, les premiers capteurs 23 aptes à fournir une information sur des éléments 11A, 11B, 11C susceptibles d'être rencontrés par l'aéronef 15 et/ou le tracteur 21 lors de l'opération de remorquage de l'aéronef 15 par le tracteur 21.

De même un tel système de remorquage permet également de mettre en œuvre un procédé de remorquage d'aéronefs 15 comprenant les étapes suivantes :
- identification de l'aéronef 15 à tracter au niveau de l'aire de stationnement équipée du ou des premiers capteurs 23 aptes à fournir une information sur des éléments susceptibles d'être rencontrés par l'aéronef 15 et/ou un tracteur 21 lors de l'opération de remorquage de l'aéronef 15,
- identification du tracteur 21 configuré pour être opéré à distance au moyen d'une connexion sans fil et apte à tracter l'aéronef 15,
- commande à distance du tracteur 21 identifié pour tracter l'aéronef 15 à partir d'un dispositif de commande connecté au tracteur 21 à partir de la connexion sans fil, le dispositif de commande récupérant la ou les informations fournies par le ou les premiers capteurs 23 et la ou les exploitant pour commander le tracteur 21.

Comme déjà discuté en lien avec la figure 2, les étapes d'identification de l'aéronef 15 et du tracteur21 peuvent être mises en œuvre par l'opérateur au moyen d'un logiciel de gestion de flotte, tel que le logiciel XOPS^{™} commercialisé par la société RESONATE^{™}.

On notera que, plus spécifiquement le dispositif de commande 22, ou généralement les dispositifs de commande, peuvent parfaitement être intégrés dans les opérations de fonctionnement de l'aéroport en suivant les protocoles mis en place par la tour de contrôle. Selon cette possibilité, le système de remorquage peut permettre la mise en œuvre d'un procédé de gestion des aéronefs 15 accueillis dans l'aéroport 1 et plus précisément dans les aires de stationnement 10 de l'aéroport. Un tel procédé de gestion comprend les étapes suivantes :
- identification du ou des tracteurs 21 disponibles avec prise en compte de leur emplacement et leur état de fonctionnement, tel que par exemple leur niveau de batterie ou de réservoir,
- définition, en conformité avec un protocole imposé par la tour de contrôle et de la configuration des aires de stationnement, des opérations de remorquage successives à mettre en œuvre par les tracteurs 21,
- commande, en conformité de la présente invention, du ou des tracteurs 21 à partir du ou des dispositifs de commande 22 des opérations de tractage en conformité de la définition décidée.

La figure 4 illustre un système de remorquage d'aéronefs selon un deuxième mode de réalisation de l'invention dans lequel les premiers capteurs 23 sont montés sur des engins autonomes dédiés 23A. Un système de remorquage d'aéronef selon ce deuxième mode de réalisation se différencie d'un système de remorquage selon le premier mode en ce que les premiers capteurs équipent un engin mobile dédié 23A respectif et ne sont donc pas agencés de manière fixe dans l'aire de stationnement.

Dans le cadre de ce deuxième mode de réalisation, les engins mobiles 23A équipés des premiers capteurs sont configurés pour accompagner l'aéronef 15 et le tracteur 21 pendant toute l'opération de tractage ceci afin de couvrir l'intégralité de la zone autour de l'aéronef et définir une barrière immatérielle 24 autour de ce dernier.

Selon une possibilité de l'invention, les engins mobiles dédiés sont préférentiellement autonomes et peuvent ainsi, par exemple, être programmés pour se positionner vis-à-vis d'un élément de référence de l'aéronef 15 ou vis-à-vis du tracteur 21. En variante, les engins mobiles peuvent être commandés par le dispositif de commande ou le tracteur 21 afin qu'ils soient déplacés en même temps que le tracteur 21 afin que les premiers capteurs 23 couvrent ensemble une zone donnée en référence au tracteur 21. Bien entendu, selon cette variante, cette zone donnée peut être adaptée en fonction des dimensions de l'aéronef 15. De cette façon, les engins mobiles 23A définissent ensemble, comme montré sur la figure 4, une barrière immatérielle 24 délimitant cette zone donnée dans laquelle sera détectée l'arrivée de tout type d'éléments 11A, 11B, 11C susceptibles d'être rencontrés par l'aéronef 15 et/ou le tracteur 21.

Un système de remorquage selon ce deuxième mode de réalisation de l'invention présente l'avantage de faciliter l'équipement de l'aéroport 1 puisque qu'un tel système ne nécessite pas que l'aire de stationnement 10 dans laquelle doit avoir lieu le remorquage ait besoin d'être prééquipée par les premiers capteurs 23, le tracteur 21 pouvant être accompagné par les engins mobiles dédiés au moment de sa venue pour réaliser l'opération de remorquage.

On notera également qu'en variante au premier et au deuxième mode de réalisation décrit ci-dessus, comme cela a déjà été discuté, les premiers capteurs peuvent équipés des véhicules aéroportuaires, tels que d'autres tracteurs. Dans le cadre de cette variante, les premiers capteurs peuvent ainsi être des capteurs équipant déjà ces véhicules notamment dans le cadre d'une autonomisation de ces derniers. Comme le deuxième mode de réalisation, cette variante du premier et du deuxième mode de réalisation présente également l'avantage de faciliter l'équipement de l'aéroport 1 puisque qu'un tel système ne nécessite pas que l'aire de stationnement 10 dans laquelle doit avoir lieu le remorquage ait besoin d'être prééquipée.

Bien entendu, dans le cadre de l'invention, le système de remorquage peut également être hybride aux premier, deuxième et cette dernière variante de l'invention sans que l'on sorte du cadre de l'invention, certains premiers capteurs pouvant par exemple équiper l'aire de stationnement, et d'autres premiers capteurs équipant d'autres véhicules aéroportuaires.

## Revendications

1. Système de remorquage d'aéronefs pour un aéroport (1) présentant au moins une zone de remorquage (10) dans laquelle un aéronef (15) est susceptible d'être remorqué, le système de remorquage comprenant :
- au moins un tracteur (21) configuré pour être opéré à distance au moyen d'une connexion sans fil et adapté pour tracter l'aéronef (15),
- au moins un dispositif de commande (22) destiné à être connecté au tracteur (21) à partir de la connexion sans fil et apte à commander ledit tracteur (21), et
- au moins un premier capteur (23) destiné à être agencé dans la zone de remorquage (10), ce ou ces premiers capteurs (23) étant indépendants du tracteur (21) et étant aptes à fournir une information sur des éléments (11A, 11B, 11C) susceptibles d'être rencontrés par l'aéronef (15) et/ou le tracteur (21) lors de l'opération de remorquage de l'aéronef (15) par le tracteur (21),
le dispositif de commande (22) étant en outre configuré pour récupérer la ou les informations fournies par l'au moins un premier capteur (23) et la ou les exploiter lors de la commande du tracteur (21) pour tracter l'aéronef (15),
dans lequel l'au moins un premier capteur (23) est un capteur apte à fournir une image d'au moins une partie de la zone de remorquage (10),
dans lequel le dispositif de commande (22) présente une interface homme/machine (221, 222, 223, 225) de telle manière à autoriser la commande dudit tracteur par un opérateur (31) à partir dudit dispositif de commande (22),
dans lequel le ou chaque tracteur (21) comprend au moins un deuxième capteur apte à détecter un obstacle se trouvant sur sa trajectoire et dans lequel le dispositif de commande (22) est en outre configuré pour récupérer les informations fournies par l'au moins un deuxième capteur et les exploiter lors de la commande du tracteur (21) pour tracter l'aéronef (15),
et dans lequel le dispositif de commande (22) comprend un système d'affichage apte à fournir un affichage incluant au moins en partie la ou les images fournies par l'au moins un premier capteur (23) et les informations fournies par l'au moins un deuxième capteur.

2. Système de remorquage d'aéronefs selon la revendication 1,dans lequel l'au moins premier capteur (23) est choisi parmi : une caméra optique dans le visible ou l'infrarouge et un imageur du type télédétection par laser

3. Système de remorquage d'aéronefs selon la revendication 2, comprenant une pluralité de premiers capteurs (23) destinés à équiper la zone de remorquage (10) et dans lequel le dispositif de commande (22) est configuré pour combiner les images fournies par les premiers capteurs (23) afin de fournir un affichage des éléments (11A, 11B, 11C) susceptibles d'être rencontrés par l'aéronef (15) et/ou le tracteur (21) sur la zone de remorquage (10) lors de l'opération de remorquage.

4. Système de remorquage d'aéronefs selon l'une quelconque des revendications 1 à 2, dans lequel le ou au moins un premier capteur (23) est destiné à être installé de manière fixe dans la zone de remorquage (10).

5. Système de remorquage d'aéronefs selon l'une quelconque des revendications 1 à 4, dans lequel le, ou au moins un, premier capteur équipe un engin mobile, ledit engin mobile étant préférentiellement choisi parmi un véhicule aéroportuaire et un engin mobile dédié (23A) avantageusement autonome.

6. Système de remorquage d'aéronefs selon l'une quelconque des revendications 1 à 5, dans lequel le dispositif de commande (22) est apte à commander le tracteur (21) de manière autonome sur la base d'au moins la ou les informations fournies par le ou les premiers capteurs (23).

7. Aéroport présentant au moins une zone de remorquage (10) dans laquelle un aéronef (15) est susceptible d'être remorqué, l'aéroport étant équipé d'un système de remorquage d'aéronefs selon l'une quelconque des revendications 1 à 6.

8. Procédé d'installation d'un système de remorquage d'aéronefs (15) selon l'une quelconque des revendications 1 à 6 dans un aéroport (1) selon la revendication 7, le procédé d'installation comprenant les étapes suivantes :
- fourniture de l'au moins un tracteur (21),
- installation de l'au moins un dispositif de commande (22), et
- agencement dans la zone de remorquage (10) de l'au moins un premier capteur (23), le ou chaque premier capteur (23) étant indépendant du tracteur (21).

9. Procédé d'installation selon la revendication 8, dans lequel l'agencement dans la zone de remorquage (1) de l'au moins un premier capteur (23) est réalisé par le déploiement d'au moins un engin mobile (23A) présentant ledit au moins un premier capteur (23), l'engin mobile (23A) étant préférentiellement choisi parmi un véhicule aéroportuaire et un engin mobile autonome dédié (23A).

10. Procédé de remorquage d'aéronefs (15) comprenant les étapes suivantes :
- identification de l'aéronef (15) à tracter au niveau d'une zone de remorquage (10) équipée d'au moins un premier capteur (23) apte à fournir une information sur des éléments (11A, 11B, 11C) susceptibles d'être rencontrés par l'aéronef (15) et/ou un tracteur (21) lors d'une opération de remorquage de l'aéronef (15),
- identification d'un tracteur (21) configuré pour être opéré à distance au moyen d'une connexion sans fil et apte à tracter l'aéronef (15),
- commande à distance du tracteur (21) identifié pour tracter l'aéronef (15) à partir d'un dispositif de commande (22) connecté au tracteur (21) à partir de la connexion sans fil, le dispositif de commande récupérant la ou les informations fournies par l'au moins un premier capteur (23) et la ou les exploitant pour commander le tracteur (21), le premier capteur (23) étant agencé dans la zone de remorquage (10) et étant apte à fournir une information sur des éléments (11A, 11B, 11C) susceptibles d'être rencontrés par l'aéronef (15) et/ou le tracteur (21) lors de l'opération de remorquage de l'aéronef (15) par le tracteur (21), le ou chaque premier capteur (23) étant indépendant du tracteur (21),
dans lequel l'au moins un premier capteur (23) est un capteur apte à fournir une image d'au moins une partie de la zone de remorquage (10),
dans lequel le dispositif de commande (22) présente une interface homme/machine (221, 222, 223, 225) de telle manière à autoriser la commande dudit tracteur par un opérateur (31) à partir dudit dispositif de commande (22),
dans lequel le ou chaque tracteur (21) comprend au moins un deuxième capteur apte à détecter un obstacle se trouvant sur sa trajectoire et dans lequel le dispositif de commande (22) est en outre configuré pour récupérer les informations fournies par l'au moins un deuxième capteur et les exploiter lors de la commande du tracteur (21) pour tracter l'aéronef (15),
et dans lequel le dispositif de commande (22) comprend un système d'affichage apte à fournir un affichage incluant au moins en partie la ou les images fournies par l'au moins un premier capteur (23) et les informations fournies par l'au moins un deuxième capteur.

## Patentansprüche

1. Flugzeugschleppsystem für einen Flughafen (1), der mindestens einen Schleppbereich (10) aufweist, in den ein Flugzeug (15) geschleppt werden kann, wobei das Schleppsystem Folgendes umfasst:
- mindestens eine Zugmaschine (21), die so eingerichtet ist, dass sie mittels einer drahtlosen Verbindung ferngesteuert wird und zum Ziehen des Flugzeugs (15) geeignet ist,
- mindestens eine Steuervorrichtung (22), die dazu bestimmt ist, über die drahtlose Verbindung mit der Zugmaschine (21) verbunden zu werden und in der Lage ist, die Zugmaschine (21) zu steuern, und
- mindestens einen ersten Sensor (23), der dazu bestimmt ist, im Schleppbereich (10) angeordnet zu sein, wobei dieser oder diese ersten Sensoren (23) unabhängig von der Zugmaschine (21) sind und in der Lage sind, eine Information über Elemente (11A, 11B, 11C) bereitzustellen, auf die das Flugzeug (15) und/oder die Zugmaschine (21) während des Schleppvorgangs des Flugzeugs (15) durch die Zugmaschine (21) treffen können,
wobei die Steuervorrichtung (22) ferner so eingerichtet ist, dass sie die von dem mindestens einen ersten Sensor (23) bereitgestellte(n) Information(en) abruft und diese bei der Steuerung der Zugmaschine (21) zum Ziehen des Flugzeugs (15) auswertet,
wobei der mindestens eine erste Sensor (23) ein Sensor ist, der in der Lage ist, ein Bild von mindestens einem Teil des Schleppbereichs (10) bereitzustellen,
wobei die Steuervorrichtung (22) eine Mensch-Maschine-Schnittstelle (221, 222, 223, 225) aufweist, um die Steuerung der Zugmaschine durch einen Bediener (31) von der Steuervorrichtung (22) aus zu ermöglichen,
wobei die oder jede Zugmaschine (21) mindestens einen zweiten Sensor umfasst, der in der Lage ist, ein Hindernis zu erkennen, das sich in seiner Bahn befindet, und wobei die Steuervorrichtung (22) ferner so eingerichtet ist, dass sie die von dem mindestens zweiten Sensor bereitgestellten Informationen abruft und diese bei der Steuerung der Zugmaschine (21) auswertet, um das Flugzeug (15) zu ziehen,
und wobei die Steuervorrichtung (22) ein Anzeigesystem umfasst, das in der Lage ist, eine Anzeige bereitzustellen, die mindestens teilweise das oder die von dem mindestens einen ersten Sensor (23) bereitgestellten Bilder und die von dem mindestens einen zweiten Sensor bereitgestellten Informationen umfasst.

2. Flugzeugschleppsystem nach Anspruch 1, wobei der mindestens erste Sensor (23) ausgewählt ist aus: einer optischen Kamera im sichtbaren oder Infrarotbereich und einem Bildgeber vom Typ Laserfernerkennung

3. Flugzeugschleppsystem nach Anspruch **2,** umfassend eine Vielzahl von ersten Sensoren (23), die dazu bestimmt sind, den Schleppbereich (10) auszustatten, und wobei die Steuervorrichtung (22) so eingerichtet ist, dass sie die von den ersten Sensoren (23) bereitgestellten Bilder kombiniert, um eine Anzeige der Elemente (11A, 11B, 11C) bereitzustellen, auf die das Flugzeug (15) und/oder die Zugmaschine (21) während des Schleppvorgangs im Schleppbereich (10) treffen können.

4. Flugzeugschleppsystem nach einem der Ansprüche 1 bis 2, wobei der oder mindestens ein erste(r) Sensor (23) dazu bestimmt ist, fest im Schleppbereich (10) installiert zu sein.

5. Flugzeugschleppsystem nach einem der Ansprüche 1 bis 4, wobei der oder mindestens ein erste(r) Sensor ein mobiles Gerät ausstattet, wobei das mobile Gerät bevorzugt aus einem Flughafenfahrzeug und einem dedizierten, vorteilhafterweise autonomen mobilen Gerät (23A) ausgewählt ist.

6. Flugzeugschleppsystem nach einem der Ansprüche 1 bis 5, wobei die Steuervorrichtung (22) in der Lage ist, die Zugmaschine (21) autonom basierend auf mindestens der oder den Informationen zu steuern, die von dem oder den ersten Sensoren (23) bereitgestellt werden.

7. Flughafen, der mindestens einen Schleppbereich (10) aufweist, in dem ein Flugzeug (15) geschleppt werden kann, wobei der Flughafen mit einem Flugzeugschleppsystem nach einem der Ansprüche 1 bis 6 ausgestattet ist.

8. Verfahren zur Installation eines Flugzeugschleppsystems (15) nach einem der Ansprüche 1 bis 6 in einem Flughafen (1) nach Anspruch 7, wobei das Installationsverfahren die folgenden Schritte umfasst:
- Bereitstellung der mindestens einen Zugmaschine (21),
- Installation der mindestens einen Steuervorrichtung (22), und
- Anordnung des mindestens einen ersten Sensors (23) im Schleppbereich (10), wobei der oder jeder erste Sensor (23) unabhängig von der Zugmaschine (21) ist.

9. Installationsverfahren nach Anspruch 8, wobei die Anordnung im Schleppbereich (1) des mindestens einen ersten Sensors (23) durch den Einsatz von mindestens einem mobilen Gerät (23A), das den mindestens einen ersten Sensor (23) aufweist, erfolgt, wobei das mobile Gerät (23A) bevorzugt aus einem Flughafenfahrzeug und einem dedizierten autonomen mobilen Gerät (23A) ausgewählt ist.

10. Verfahren zum Abschleppen von Luftfahrzeugen (15), umfassend die folgenden Schritte:
- Identifizierung des zu ziehenden Flugzeugs (15) an einem Schleppbereich (10), der mit mindestens einem ersten Sensor (23) ausgestattet ist, der in der Lage ist, eine Information über Elemente (11A, 11B, 11C) bereitzustellen, auf die das Flugzeug (15) und/oder eine Zugmaschine (21) bei einem Schleppvorgang des Flugzeugs (15) treffen können,
- Identifizierung einer Zugmaschine (21), die so eingerichtet ist, dass sie mittels einer drahtlosen Verbindung ferngesteuert wird und zum Ziehen des Flugzeugs (15) geeignet ist,
- Fernsteuerung der Zugmaschine (21), die zum Ziehen des Flugzeugs (15) identifiziert wurde, von einer mit der Zugmaschine (21) über die drahtlose Verbindung verbundenen Steuervorrichtung (22) aus, wobei die Steuervorrichtung die von dem mindestens einen ersten Sensor (23) bereitgestellte(n) Information(en) abruft und diese bei der Steuerung der Zugmaschine (21) auswertet, wobei der erste Sensor (23) im Schleppbereich (10) angeordnet ist und in der Lage ist, eine Informationen über Elemente (11A, 11B, 11C) bereitzustellen, auf die das Flugzeug (15) und/oder die Zugmaschine (21) während des Schleppvorgangs des Flugzeugs (15) durch die Zugmaschine (21) treffen können, wobei der oder jeder erste Sensor (23) unabhängig von der Zugmaschine (21) ist,
wobei der mindestens eine erste Sensor (23) ein Sensor ist, der in der Lage ist, ein Bild von mindestens einem Teil des Schleppbereichs (10) bereitzustellen,
wobei die Steuervorrichtung (22) eine Mensch-Maschine-Schnittstelle (221, 222, 223, 225) aufweist, um die Steuerung der Zugmaschine durch einen Bediener (31) von der Steuervorrichtung (22) aus zu ermöglichen,
wobei die oder jede Zugmaschine (21) mindestens einen zweiten Sensor umfasst, der in der Lage ist, ein Hindernis zu erkennen, das sich in seiner Bahn befindet, und wobei die Steuervorrichtung (22) ferner so eingerichtet ist, dass sie die von dem mindestens zweiten Sensor bereitgestellten Informationen abruft und diese bei der Steuerung der Zugmaschine (21) auswertet, um das Flugzeug (15) zu ziehen,
und wobei die Steuervorrichtung (22) ein Anzeigesystem umfasst, das in der Lage ist, eine Anzeige bereitzustellen, die mindestens teilweise das oder die von dem mindestens einen ersten Sensor (23) bereitgestellten Bilder und die von dem mindestens einen zweiten Sensor bereitgestellten Informationen umfasst.

## Claims

1. Aircraft towing system for an airport (1) having at least one towing zone (10) in which an aircraft (15) is likely to be towed, the towing system comprising:
- at least one tow-tractor (21) configured to be operated remotely by means of a wireless connection and suitable for towing the aircraft (15),
- at least one control device (22) intended to be connected to the tow-tractor (21) using the wireless connection and able to control said tow-tractor (21), and
- at least one first sensor (23) intended to be positioned in the towing zone (10), this or these first sensors (23) being independent of the tow-tractor (21) and being able to supply information about elements (11A, 11B, 11C) likely to be encountered by the aircraft (15) and/or the tow-tractor (21) during the operation of towing the aircraft (15) using the tow-tractor (21),
the control device (22) being further configured to collect the information supplied by the at least one first sensor (23) and exploit it in controlling the tow-tractor (21) to tow the aircraft (15),
wherein the at least one first sensor (23) is a sensor capable of providing an image of at least a portion of the towing area (10),
wherein the control device (22) has a human-machine interface (221, 222, 223, 225) such as to allow the tractor to be controlled by an operator (31) from the control device (22),
wherein the tractor or each tractor (21) comprises at least one second sensor capable of detecting an obstacle located on its path, and wherein the control device (22) is further configured to retrieve the information provided by the at least one second sensor and to use it when controlling the tractor (21) to tow the aircraft (15),
and wherein the control device (22) comprises a display system capable of providing a display including at least part of the image or images provided by the at least one first sensor (23) and the information provided by the at least one second sensor.

2. Aircraft towing system according to Claim 1, wherein the at least first sensor (23) is selected from: an optical camera in the visible or infrared range and a laser remote sensing imager.

3. Aircraft towing system according to Claim 2, comprising a plurality of first sensors (23) intended to equip the towing area (10) and in which the control device (22) is configured to combine the images provided by the first sensors (23) in order to provide a display of the elements (11A, 11B, 11C) likely to be encountered by the aircraft (15) and/or the tractor (21) in the towing area (10) during the towing operation.

4. Aircraft towing system according to any of claims 1 to 2, wherein or at least one first sensor (23) is intended to be installed in a fixed manner in the towing area (10).

5. Aircraft towing system according to any of claims 1 to 4, wherein the first sensor or at least one first sensor is fitted to a mobile device, said mobile device being preferably selected from an aircraft and a dedicated mobile device (23A) which is advantageously autonomous.

6. Aircraft towing system according to any of claims 1 to 5, wherein the control device (22) is capable of controlling the tractor (21) autonomously based on at least the information provided by the first sensor(s) (23).

7. An airport having at least one towing area (10) in which an aircraft (15) can be towed, the airport being equipped with an aircraft towing system according to any of claims 1 to 6.

8. Method for installing an aircraft towing system (15) according to any of claims 1 to 6 in an airport (1) according to claim 7, the installation method comprising the following steps:
- providing the at least one tractor (21),
- installing the at least one control device (22),
- arranging the at least one first sensor (23) in the towing area (10),
the or each first sensor (23) being independent of the tractor (21).

9. The installation method according to claim 8, wherein the arrangement in the towing area (1) of the at least one first sensor (23) is achieved by deploying at least one mobile device (23A) having said at least one first sensor (23), the mobile device (23A) being preferably selected from an aircraft and a dedicated autonomous mobile device (23A).

10. Method for towing aircraft (15) comprising the following steps:
- identifying the aircraft (15) to be towed at a towing area (10) equipped with at least one first sensor (23) capable of providing information on elements (11A, 11B, 11C) that may be encountered by the aircraft (15) and/or a tractor (21) during an aircraft towing operation (15),
- identifying a tractor (21) configured to be operated remotely by means of a wireless connection and capable of towing the aircraft (15),
- remote control of the identified tractor (21) to tow the aircraft (15) from a control device (22) connected to the tractor (21) via the wireless connection, the control device retrieving the information provided by the at least one first sensor (23) and using it to control the tractor (21), the first sensor (23) being arranged in the towing area (10) and being capable of providing information on elements (11A, 11B, 11C) likely to be encountered by the aircraft (15) and/or the tractor (21) during the towing operation of the aircraft (15) by the tractor (21), the or each first sensor (23) being independent of the tractor (21),
wherein the at least one first sensor (23) is a sensor capable of providing an image of at least a part of the towing area (10),
wherein the control device (22) has a human-machine interface (221, 222, 223, 225) such as to allow the tractor to be controlled by an operator (31) from the control device (22),
wherein the tractor or each tractor (21) comprises at least one second sensor capable of detecting an obstacle located on its path, and wherein the control device (22) is further configured to retrieve the information provided by the at least one second sensor and to use it when controlling the tractor (21) to tow the aircraft (15),
and wherein the control device (22) comprises a display system capable of providing a display including at least part of the image or images provided by the at least one first sensor (23) and the information provided by the at least one second sensor.
